(19) Europäisches Patentamt / European Patent Office / Office européen des brevets

(11) **EP 4 219 620 A1**

(12) **EUROPEAN PATENT APPLICATION**
published in accordance with Art. 153(4) EPC

(43) Date of publication:
**02.08.2023 Bulletin 2023/31**

(21) Application number: **21872403.7**

(22) Date of filing: **21.09.2021**

(51) International Patent Classification (IPC):
*C08L 23/26* (2006.01)   *C08L 25/04* (2006.01)
*C08L 27/18* (2006.01)   *C08L 83/04* (2006.01)
*C08L 101/00* (2006.01)

(52) Cooperative Patent Classification (CPC):
**C08L 23/26; C08L 25/04; C08L 27/18; C08L 83/04; C08L 101/00**

(86) International application number:
**PCT/JP2021/034503**

(87) International publication number:
**WO 2022/065274 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2020  JP 2020161903**

(71) Applicant: **Toray Industries, Inc.**
**Tokyo 103-8666 (JP)**

(72) Inventors:
• **IZUMI, Ryutaro**
  **Ichihara-shi, Chiba 299-0196 (JP)**
• **HASE, Takayuki**
  **Nagoya-shi, Aichi 455-8502 (JP)**

(74) Representative: **Kador & Partner Part mbB**
**Corneliusstraße 15**
**80469 München (DE)**

(54) **THERMOPLASTIC RESIN COMPOSITION AND MOLDED ITEM FORMED FROM SAME**

(57)    A thermoplastic resin composition including: a thermoplastic resin (A), a modified polyolefin resin (B), a modified polyorganosiloxane (C), and a polytetrafluoroethylene (D), wherein the thermoplastic resin (A) is a thermoplastic resin other than the modified polyolefin resin (B), and wherein, with respect to 100 parts by mass of the total amount of the thermoplastic resin (A) and the modified polyolefin resin (B), the amount of the modified polyolefin resin (B) is 0.1 part by mass or more and 5 parts by mass or less, the amount of the modified polyorganosiloxane (C) is 0.5 part by mass or more and 5 parts by mass or less, and the amount of the polytetrafluoroethylene (D) is 1 part by mass or more and 10 parts by mass or less. Provided are a thermoplastic resin composition and a molded article thereof, in which the thermoplastic resin composition has both water repellency and oil repellency, thereby achieving excellent antifouling properties, and affords an excellent appearance to the molded article.

EP 4 219 620 A1

**Description**

TECHNICAL FIELD

The present invention relates to a thermoplastic resin composition and a molded article composed thereof, in which the thermoplastic resin composition contains a thermoplastic resin, a modified polyolefin resin, a modified polyorganosiloxane, and polytetrafluoroethylene in combination at specific ratios, has excellent water repellency and oil repellency, and affords an excellent appearance to the molded article.

BACKGROUND ART

In recent years, molded articles that are produced using a thermoplastic resin and have applications such as for wet areas have been increasingly desired to have antifouling properties including: a function that makes it less prone to have a watery stain or an oily stain stuck; and a function that enables a stuck stain to be removed easily. An effective means of affording antifouling properties is to enhance the water repellency and oil repellency of the surface of a molded article. Affording excellent antifouling properties involves achieving both water repellency and oil repellency.

Patent Document 1 discloses a synthetic resin molded article having excellent releasability and water repellency, including: a thermoplastic resin; a modified silicone compound obtained by allowing a silicone compound having at least one hydroxyl group to react with a hydrocarbon compound having at least one double bond that reacts with the hydroxyl group; and/or a modified silicone compound obtained by allowing a polyolefin resin having a functional group in the side chain to react with a silicone compound having a functional group that can react with the functional group of the polyolefin resin.

Patent Document 2 discloses a water-repellent thermoplastic resin composition including: a graft copolymer obtained by graft-copolymerizing a monomer mixture composed of an aromatic vinyl-based monomer, a vinyl cyanide monomer, and another copolymerizable vinyl-based monomer in the presence of a rubbery polymer; a vinyl-based copolymer obtained by copolymerizing a monomer mixture composed of an aromatic vinyl-based monomer, a vinyl cyanide monomer, and another copolymerizable vinyl-based monomer; a modified vinyl copolymer containing at least one reactive group selected from an epoxy group, a carboxyl group, and an acid anhydride; and a modified polyorganosiloxane containing at least one reactive group selected from an epoxy group, a carboxyl group, and an acid anhydride.

Patent Document 3 discloses an interior automobile part characterized by being composed of a thermoplastic resin composition including: a styrene resin containing: a rubber-reinforced styrene resin obtained by polymerizing, in the presence of a rubbery polymer containing a conjugated diene-based rubbery polymer and/or an acryl-based rubbery polymer, an aromatic vinyl compound or a vinyl-based monomer containing an aromatic vinyl compound and another vinyl monomer copolymerizable with the aromatic vinyl compound; and/or a styrene-based

(co)polymer of the vinyl-based monomer; 5 to 90 mass% of an olefin resin; and at least one block copolymer selected from: a block copolymer containing a polymer block mainly composed of an aromatic vinyl compound and a polymer block mainly composed of a conjugated diene compound; and a hydrogenated product thereof.

PRIOR ART DOCUMENTS

PATENT DOCUMENTS

Patent Document 1: Japanese Patent Laid-open Publication No. 2-202553
Patent Document 2: Japanese Patent Laid-open Publication No. 10-316833
Patent Document 3: Japanese Patent Laid-open Publication No. 2011-168186

SUMMARY OF THE INVENTION

PROBLEMS TO BE SOLVED BY THE INVENTION

The synthetic resin molded article described in Patent Document 1 has releasability and water repellency enhanced by a silicone compound having a functional group, a polyolefin resin having a functional group, and the like, but is not described in the context of oil repellency, and will undesirably fail to develop antifouling properties effectively. The water-repellent thermoplastic resin composition described in Patent Document 2 is based on a vinyl-based copolymer, and has water repellency enhanced by a vinyl-based copolymer having a reactive group and a modified polyorganosiloxane having a reactive group, but is not described in the context of oil repellency, and will undesirably fail to develop antifouling properties effectively. The interior automobile part described in Patent Document 3 is described as containing a blend of polytetrafluoroethylene and a silicone oil in addition to a styrene resin and an olefin resin, but is not described in the context of a combination of the components and of the synergistic effect in relation to water repellency and oil repellency, and will undesirably fail to develop antifouling properties effectively.

An object of the present invention is to provide a thermoplastic resin composition and a molded article thereof, in which the thermoplastic resin composition contains a thermoplastic resin, a modified polyolefin resin, a modified polyorganosiloxane, and polytetrafluoroethylene in combination at specific ratios, thereby achieving both excellent water repellency and excellent oil repellency, and affords an excellent appearance to the molded article.

SOLUTIONS TO THE PROBLEMS

To solve the above-mentioned problems, a thermoplastic resin composition according to the present invention has the following constitution: that is, a thermoplastic resin composition including: a thermoplastic resin (A), a modified polyolefin resin (B), a modified polyorganosiloxane (C), and a polytetrafluoroethylene (D), wherein the thermoplastic resin (A) is a thermoplastic resin other than the modified polyolefin resin (B), and wherein, with respect to 100 parts by mass of the total amount of the thermoplastic resin (A) and the modified polyolefin resin (B), the amount of the modified polyolefin resin (B) is 0.1 part by mass or more and 5 parts by mass or less, the amount of the modified polyorganosiloxane (C) is 0.5 part by mass or more and 5 parts by mass or less, and the amount of the polytetrafluoroethylene (D) is 1 part by mass or more and 10 parts by mass or less.

A molded article according to the present invention has the following constitution: that is, a molded article composed of the above-described thermoplastic resin composition.

For the thermoplastic resin composition according to the present invention, (B) × (C) is 7 or less, wherein (B) × (C) represents the product of the amount of the modified polyolefin resin (B) and the amount of the modified polyorganosiloxane (C), both of the amounts are on a part-by-mass basis, is preferably 7 or less, assuming that the total amount of the thermoplastic resin (A) and the modified polyolefin resin (B) is 100 parts by mass.

In the thermoplastic resin composition according to the present invention, the thermoplastic resin (A) preferably contains at least one kind of styrene resin.

In the thermoplastic resin composition according to the present invention, the modified polyolefin resin (B) is preferably a modified polypropylene resin.

In the thermoplastic resin composition according to the present invention, the modified polyolefin resin (B) preferably has a weight-average molecular weight of 100,000 or more.

In the thermoplastic resin composition according to the present invention, the modified polyorganosiloxane (C) is preferably an alicyclic epoxy-modified silicone oil.

EFFECTS OF THE INVENTION

The present invention makes it possible to obtain a thermoplastic resin composition and a molded article thereof, in which the thermoplastic resin composition has both water repellency and oil repellency, thereby achieving excellent antifouling properties, and affords an excellent appearance to the molded article.

EMBODIMENTS OF THE INVENTION

A thermoplastic resin composition in an embodiment of the present invention (hereinafter, referred to as the "resin composition" in some cases) contains the above-mentioned thermoplastic resin (A), modified polyolefin resin (B), modified polyorganosiloxane (C), and polytetrafluoroethylene (D). These components will now be each described.

<Thermoplastic Resin (A)>

The thermoplastic resin (A) to be used for the present invention is a thermoplastic resin other than the modified polyolefin resin (B). The excellent water repellency and oil repellency are achieved by the modified polyolefin resin (B), the modified polyorganosiloxane (C), and the polytetrafluoroethylene (D). The thermoplastic resin (A) is subject to no particular limitation. Examples of the thermoplastic resin include at least one selected from polyolefin resins, styrene resins, polyester resins, polyether resins, polycarbonate resins, polyamide resins, halogen-containing resins, and acryl resins.

Examples of the polyolefin resin include at least one of: $\alpha$-olefin polymers such as polyethylene, low-density polyethylene, high-density polyethylene, cross-linked polyethylene, ultrahigh-molecular-weight polyethylene, polypropylene, block copolymer polypropylene, isotactic polypropylene, syndiotactic polypropylene, polybutene, cycloolefin polymers, poly-3-methyl-1-butene, poly-3-methyl-1-pentene, and poly-4-methyl-1-pentene; $\alpha$-olefin copolymers such as ethylene-propylene block or random copolymers, ethylene-methyl methacrylate copolymers, ethylene-methyl acrylate copolymers, ethylene-ethyl acrylate copolymers, ethylene-carbon monoxide-acrylic ester copolymers, ethylene-butyl acrylate copolymers, and ethylene-vinyl acetate copolymers; polyfluoroolefin; and polyolefin-based thermoplastic elastomers.

Examples of the styrene resin include; copolymers of an aromatic vinyl-based monomer alone; copolymers of an aromatic vinyl-based monomer and a vinyl cyanide-based monomer; graft copolymers obtained by graft-polymerizing a vinyl-based monomer mixture containing at least an aromatic vinyl-based monomer and a vinyl cyanide-based monomer in the presence of a rubbery polymer; and copolymers of an aromatic vinyl-based monomer and another monomer, for example, maleic anhydride, N-phenylmaleimide, (meth)acrylic acid, (meth)acrylic ester, glycidyl methacrylate, or the like. Examples of the resin include at least one of: thermoplastic resins such as polystyrene (PS) resins, impact resistance polystyrene (HIPS), acrylonitrile-styrene (AS) resins, acrylonitrile-butadiene-styrene (ABS) resins, methyl methacrylate-butadiene-styrene (MBS) resins, methyl methacrylate-acrylonitrile-butadiene-styrene (MABS) resins, styrene-maleic anhydride-A-phenylmaleimide resins, styrene-acrylonitrile-N-phenylmaleimide resins, $\alpha$-methylstyrene-styrene-acrylonitrile-butadiene, acrylate-styrene-acrylonitrile (ASA) resins, styrene-maleic anhydride (SMA) resins, methacrylate-styrene (MS) resins, styrene-isoprene-styrene (SIS) resins, acrylonitrile-ethylene propylene rubber-styrene (AES) resins, and styrene-butadiene-butylene-styrene (SBBS) resins; hydrogenated styrene-based elastomer resins in which the double bond of the butadiene or the isoprene is hydrogenated, such as styrene-ethylene-butylene-styrene (SEBS) resins, styrene-ethylene-propylene-styrene (SEPS) resins, styrene-ethylene-propylene (SEP) resins, and styrene-ethylene-ethylene-propylene-styrene (SEEPS) resins; and the like.

Examples of the polyester resin include at least one of: aromatic polyesters, examples of which include polyalkylene terephthalates such as polyethylene terephthalate, polybutylene terephthalate, and polycyclohexanedimethylene terephthalate, and polyalkylene naphthalates such as polyethylene naphthalate and polybutylene naphthalate; linear polyesters such as polytetramethylene terephthalate; degradable aliphatic polyesters such as polyhydroxybutyrate, polycaprolactone, polybutylene succinate, polyethylene succinate, polylactic acid, polymalic acid, polyglycolic acid, and polydioxane, poly(2-oxetanone); and the like.

Examples of the polyether resin include at least one of polyacetal, polyphenylene ether, polyether ketone, polyether ether ketone, polyether ketone ketone, polyether ether ketone ketone, polyether sulfone, polyether imide, polyether ester amide, and the like.

Examples of the polycarbonate resin include at least one of polycarbonate, branched polycarbonate, and the like.

A polyamide resin is a resin obtained by polycondensation between an aminocarboxylic acid, lactam, or diamine and a dicarboxylic acid. Examples of a raw material for the polyamide resin include: aminocarboxylic acids such as 6-aminocaproic acid, 11-aminoundecanoic acid, and 12-aminododecanoic acid; lactams such as $\varepsilon$-caprolactam and $\omega$-laurolactam; aliphatic diamines such as tetramethylene diamine, hexamethylene diamine, ethylene diamine, trimethylene diamine, pentamethylene diamine, 2-methylpentamethylene diamine, undecamethylene diamine, dodecamethylene diamine, nonamethylene diamine, and 5-methylnonamethylene diamine; aromatic diamines such as metaxylylene diamine and paraxylylene diamine; alicyclic diamines such as aminomethylcyclohexane, bis(4-aminocyclohexyl)propane, and aminoethylpiperazine; aliphatic dicarboxylic acids such as adipic acid, suberic acid, azelaic acid, sebacic acid, and dodecanedioic acid; alicyclic dicarboxylic acids such as 1,3-cyclohexanedicarboxylic acid and 1,4-cyclohexane dicarboxylic acid; aromatic dicarboxylic acids such as terephthalic acid, isophthalic acid, 2-chloroterephthalic acid, 2-methylterephthalic acid, 5-methylisophthalic acid, 5-sodiumsulfoisophthalic acid, hexahydroterephthalic acid, hexahydroisophthalic acid, and 2,6-naphthalenedicarboxylic acid; and the like. Two or more of the polyamide resins may be used.

Examples of the halogen-containing resin include at least one of polyvinyl chloride, polyvinylidene chloride, chlorinated polyethylene, chlorinated polypropylene, polyvinylidene fluoride, chlorinated rubber, vinyl chloride-vinyl acetate copolymer, vinyl chloride-ethylene copolymer, vinyl chloride-vinylidene chloride copolymers, vinyl chloride-vinylidene chloride-vinyl acetate terpolymers, vinyl chloride-acrylic ester copolymers, vinyl chloride-maleic ester copolymers, vinyl chloride-cyclohexyl maleimide copolymers, and the like.

Examples of the acryl resin include at least one of polymethyl methacrylate (a homopolymer of methyl methacrylate), copolymers of methyl methacrylate and an acryl monomer other than methyl methacrylate, copolymers of methyl methacrylate and a vinyl-based monomer other than an acryl monomer, and the like.

In addition, the another thermoplastic resin may be, for example; a rubbery polymer such as an isoprene rubber, a butadiene rubber, an acrylonitrile-butadiene copolymer rubber, a styrene-butadiene copolymer rubber, a fluorine rubber, or a silicone rubber; or an elastomer such as a polyester-based elastomer, a nitrile-based elastomer, a nylon-based elastomer, a vinyl chloride-based elastomer, a polyamide-based elastomer, or a polyurethane-based elastomer. These may be used in combination.

The thermoplastic resin (A) to be used for the present invention preferably contains at least one styrene resin from the viewpoint of moldability, and furthermore, more preferably contains at least one rubber-reinforced styrene resin from the viewpoint of impact resistance.

Particularly preferable examples of the rubber-reinforced styrene resin include a resin composition obtained by mixing: a graft copolymer obtained by graft-copolymerizing a vinyl-based monomer mixture containing at least an aromatic vinyl-based monomer and a vinyl cyanide-based monomer in the presence of a rubbery polymer; and a vinyl-based copolymer obtained by copolymerizing a vinyl-based monomer mixture containing at least an aromatic vinyl-based monomer and a vinyl cyanide-based monomer. In this case, examples of the rubbery polymer include polybutadiene, poly(butadiene-styrene) (SBR), poly(butadiene-acrylonitrile) (NBR), polybutyl acrylate, polyisoprene, poly(butadiene-butyl acrylate), poly(butadiene-methyl methacrylate), poly(butyl acrylate-methyl methacrylate), poly(butadiene-ethyl acrylate), ethylene-propylene rubber, poly(ethylene-isoprene), poly(ethylene-methyl acrylate), natural rubber, and the like. Two or more of these may be used. Among these, polybutadiene, SBR, NBR, polybutyl acrylate, ethylene-propylene rubber, and natural rubber are preferable from the viewpoint of further enhancing the impact resistance.

In addition, the amount of the rubbery polymer is preferably 20 to 80 wt% with respect to the total amount of the rubbery polymer and the below-mentioned vinyl-based monomer mixture that constitute the graft copolymer. The rubbery polymer in an amount of 20 wt% or more makes it possible to further enhance the impact resistance of the molded article. The amount of the rubbery polymer is more preferably 35 wt% or more. On the other hand, the rubbery polymer in an amount of 80 wt% or less makes it possible to further enhance the moldability of the thermoplastic resin composition. The amount of the rubbery polymer is more preferably 65 wt% or less.

The weight-average particle size of the rubbery polymer is preferably, but not limited particularly to, 0.1 $\mu$m or more, more preferably 0.15 $\mu$m or more, from the viewpoint of enhancing the impact resistance of the molded article. On the other hand, the weight-average particle size is preferably 1.5 $\mu$m or less, more preferably 1.0 $\mu$m or less, from the viewpoint of enhancing the impact resistance, fluidity, and appearance quality of the molded article.

Here, the weight-average particle size of the rubbery polymer can be calculated from the particle size distribution of the rubbery polymer latex diluted and dispersed in an aqueous medium, in which the particle size distribution is measured by a laser scattering diffraction particle size distribution measurement apparatus "LS 13 320" (Beckman Coulter, Inc.).

Examples of the aromatic vinyl-based monomer include styrene, $\alpha$-methylstyrene, *p*-methyl styrene, *m*-methylstyrene, *o*-methylstyrene, vinyltoluene, and *t*-butylstyrene. Two or more of these may be contained. Among these, styrene is preferable from the viewpoint of further enhancing the fluidity of the thermoplastic resin composition and the rigidity of the molded article.

The amount of the aromatic vinyl-based monomer contained in the vinyl-based monomer mixture is preferably 60 wt% or more, more preferably 65 wt% or more, with respect to 100 wt% of the total amount of the vinyl-based monomer mixture, from the viewpoint of further enhancing the fluidity of the thermoplastic resin composition and the rigidity of the molded article. On the other hand, the amount of the aromatic vinyl-based monomer contained in the vinyl-based monomer mixture is preferably 85 wt% or less, more preferably 80 wt% or less, from the viewpoint of enhancing the fluidity and the impact resistance of the molded article.

Examples of the vinyl cyanide-based monomer include acrylonitrile, methacrylonitrile, ethacrylonitrile, and the like. Two or more of these may be contained. Among these, acrylonitrile is preferable from the viewpoint of further enhancing the chemical resistance and impact resistance of the molded article.

The amount of the vinyl cyanide-based monomer contained in the vinyl-based monomer mixture is preferably 15 wt% or more, more preferably 20 wt% or more, with respect to 100 wt% of the total amount of the vinyl-based monomer mixture, from the viewpoint of further enhancing the chemical resistance and impact resistance of the molded article. On the other hand, the amount of the vinyl cyanide-based monomer contained in the vinyl-based monomer mixture is preferably 35 wt% or less, more preferably 30 wt% or less, from the viewpoint of stabilizing the color tone of the molded article.

The graft copolymer is treated as follows: 80 ml of acetone is added to approximately 1 g of the graft copolymer; the resulting mixture is refluxed in a hot-water bath at 70°C for 3 hours; this solution is centrifuged at 13,000 r.p.m. for 20 minutes; and then the insoluble components are filtrated off, and dried under reduced pressure at 80°C for 5 hours, whereby the acetone-insoluble components can be separated. The acetone-insoluble components are a rubbery polymer and a vinyl-based copolymer composed of at least an aromatic vinyl-based monomer and a vinyl cyanide-based monomer and graft-copolymerized with a rubbery polymer. The acetone-insoluble components obtained is formed into a film having a thickness of 30±5 $\mu$m, using a hot-press set at 200°C, and the film is analyzed by FT-IR. From the ratio of intensity of the following peak that has appeared on an FT-IR chart, the amount of the vinyl cyanide-based monomer unit and the weight thereof can be quantitated.

Aromatic vinyl-based monomer unit: the peak at 1,605 cm$^{-1}$ corresponding to vibration of the benzene nucleus

Vinyl cyanide-based monomer unit: the peak at 2,240 cm$^{-1}$ corresponding to -C=N stretching

In addition, another monomer copolymerizable with any of these is the above-mentioned aromatic vinyl-based monomer or a vinyl-based monomer other than a vinyl cyanide-based monomer, and is subject to no particular limitation. Specific examples of the another monomer include unsaturated alkyl carboxylate ester-based monomers, unsaturated fatty acids, acryl amide-based monomers, maleimide-based monomers, and the like. Two or more of these may be contained.

The unsaturated alkyl carboxylate ester-based monomer is preferably, for example, an ester of a $C_{1-6}$ alcohol and an acrylic acid or a methacrylic acid. The ester of a $C_{1-6}$ alcohol and an acrylic acid or a methacrylic acid may further have a substituent such as a hydroxyl group or a halogen group. Examples of the ester of an alcohol having 1 to 6 carbon atoms and an acrylic acid or a methacrylic acid include methyl (meth)acrylate, ethyl (meth)acrylate, *n*-propyl (meth)acrylate, *n*-butyl (meth)acrylate, *t*-butyl (meth)acrylate, *n*-hexyl (meth)acrylate, cyclohexyl (meth)acrylate, chloromethyl (meth)acrylate, 3-hydroxypropyl (meth)acrylate, 2,3,4,5,6-pentahydroxyhexyl (meth)acrylate, 2,3,4,5-tetrahydroxypentyl (meth)acrylate, glycidyl (meth)acrylate, and the like. Two or more of these may be contained. In this regard, the term "(meth)acrylate" refers to an acrylate or a methacrylate.

Examples of the unsaturated fatty acid include itaconic acid, maleic acid, fumaric acid, butenoic acid, acrylic acid, and methacrylic acid.

Examples of the acrylamide-based monomer include acrylamide, methacrylamide, and *N*-methylacrylamide.

Examples of the maleimide-based monomer include *N*-methylmaleimide, *N*-ethylmaleimide, *N*-isopropylmaleimide, *N*-butylmaleimide, *N*-hexylmaleimide, *N*-octylmaleimide, *N*-dodecylmaleimide, *N*-cyclohexylmaleimide, and *N*-phenylmaleimide.

The weight-average molecular weight of the acetone-soluble components of the graft copolymer is subject to no particular limitation, but is preferably 50,000 to 300,000. The graft copolymer containing the acetone-soluble components having a weight-average molecular weight of 50,000 or more makes it possible to further enhance the chemical resistance of the molded article. On the other hand, the graft copolymer containing the acetone-soluble components having a weight-average molecular weight of 300,000 or less makes it possible to further enhance the fluidity, and 200,000 or less is more preferable.

The graft copolymer containing the acetone-soluble components having a weight-average molecular weight in the range of from 50,000 to 300,000 can be easily produced, for example, by using the below-mentioned initiator or chain transfer agent or by setting the polymerization temperature to the below-mentioned preferable range.

Here, the weight-average molecular weight of the acetone-soluble components of the graft copolymer can be determined by the following procedure: the acetone-insoluble components are separated from the graft copolymer by filtration to obtain a filtrate; the filtrate is concentrated with a rotary evaporator to collect acetone-soluble components; about 0.03 g of the acetone-soluble components collected is dissolved in about 15 g of tetrahydrofuran to prepare an about 0.2 wt% solution; the solution is used to measure a GPC chromatogram, from which the weight-average molecular weight can be determined in terms of polystyrene as a standard substance. The GPC measurement can be performed under the following conditions.

Measurement apparatus: Waters 2695
Column temperature: 40°C
Detector: RI 2414 (differential refractive index detector)
Flow rate of carrier eluent: 0.3 ml/min (solvent: tetrahydrofuran)
Column: TSKgel Super HZM-M (6.0 mm I.D. × 15 cm), TSKgel Super HZM-N (6.0 mm I.D. × 15 cm) connected in series (both manufactured by Tosoh Corporation).

The graft ratio of the graft copolymer is subject to no particular limitation, but is preferably 10 to 100% from the viewpoint of enhancing the impact resistance of the molded article.

Here, the graft ratio of the graft copolymer can be determined by the following method. First, 80 mL of acetone is added to approximately 1 g (m: the weight of the sample) of the graft copolymer; the resulting mixture is refluxed in a hot-water bath at 70°C for 3 hours; this solution is centrifuged at 13,000 r.p.m for 20 minutes; and then the insoluble components are filtrated off, whereby the acetone-insoluble components are obtained. The acetone-insoluble components obtained are dried under reduced pressure at 80°C for 5 hours, and then the weight (n) thereof is measured. The graft ratio is calculated from the following equation. Here, X is the rubbery polymer content (%) of the graft copolymer.

$$\text{Graft ratio } (\%) = \{[(n) - ((m) \times X/100)] / [(m) \times X/100]\} \times 100$$

Examples of a method that can be used as a method of producing the graft copolymer include, but are not limited particularly to, an arbitrary method such as an emulsion polymerization method, a suspension polymerization method, a continuous bulk polymerization method, or a solution continuous polymerization method. The emulsion polymerization method or the bulk polymerization method is preferable. The emulsion polymerization method is more preferable because this method makes it possible to easily adjust the particle size of the rubbery polymer within a desired range, and to easily adjust the polymerization stability thereof by heat removal during polymerization.

In cases where the graft copolymer is produced by an emulsion polymerization method, a method for feeding the rubbery polymer and the vinyl-based monomer mixture is subject to no particular limitation. For example, all of these components may be fed at once at an initial stage, or alternatively, a part of the vinyl-based monomer mixture may be fed continuously, or a part or all of the vinyl-based monomer mixture may be fed in installments in order to adjust the distribution of the copolymer composition. Here, that a part of the vinyl-based monomer mixture is fed continuously means that a part of the vinyl-based monomer mixture is fed at the initial stage, and the rest is continuously fed over time. That a part or all of the vinyl-based monomer mixture is fed in installments means that a part or all of the vinyl-based monomer mixture is fed at points of time after the initial feeding.

In cases where the graft copolymer is produced by an emulsion polymerization method, any kind of surfactant may be added as an emulsifier. As the any kind of surfactant, an anionic surfactant such as a carboxylate salt surfactant, a sulfate ester surfactant, or a sulfonate salt surfactant is particularly preferable. These may be used in combination of two or more kinds thereof. Examples of the salt herein include alkali metal salts such as a sodium salt, a lithium salt, and a potassium salt, and ammonium salts.

Examples of the carboxylate salt emulsifier include a caprylate salt, a caprate salt, a laurylate salt, a myristate salt, a palmitate salt, a stearate salt, an oleate salt, a linoleate salt, a linolenate salt, a rosinate salt, a behenate salt, and a dialkylsulfosccinate salt.

Examples of the sulfate ester salt emulsifier include castor oil sulfates, lauryl alcohol sulfates, polyoxyethylene lauryl sulfates, polyoxyethylene alkyl ether sulfates, and polyoxyethylene alkyl phenyl ether sulfates.

Examples of the sulfonate salt emulsifier include dodecyl benzene sulfonate salt, alkyl naphthalene sulfonate salt, alkyl diphenyl ether disulfonate salt, and naphthalene sulfonate salt condensate.

In cases where the graft copolymer is produced by an emulsion polymerization method, an initiator may be used, if desired. Examples of the initiator include peroxides, azo compounds, and water-soluble potassium persulfate. These may be used in combination of two or more kinds thereof. The initiator is used also in a redox system.

Examples of the peroxide include benzoyl peroxide, cumene hydroperoxide, dicumyl peroxide, diisopropylbenzene hydroperoxide, *t*-butyl hydroperoxide, *t*-butyl peroxyacetate, *t*-butyl peroxybenzoate, *t*-butyl isopropylcarbonate, di-*t*-butyl peroxide, *t*-butyl peroctate, 1,1-bis(*t*-butylperoxy)3,3,5-trimethylcyclohexane, 1,1-bis(*t*-butylperoxy)cyclohexane, and *t*-butylperoxy-2-ethyl hexanoate. Among these, cumene hydroperoxide, 1,1-bis(t-butylperoxy)3,3,5-trimethylcyclohexane, and 1,1-bis(t-butylperoxy)cyclohexane are particularly preferably used.

Examples of the azo compound include azobisisobutyronitrile, azobis(2,4-dimethylvaleronitrile), 2-phenylazo-2,4-dimethyl-4-methoxyvaleronitrile, 2-cyano-2-propylazoformamide, 1,1'-azobiscyclohexane-1-carbonitrile, azobis(4-methoxy-2,4-dimethylvaleronitrile), dimethyl 2,2'-azobisisobutyrate, 1-t-butylazo-2-cyanobutane, and 2-t-butylazo-2-cyano-4-methoxy-4-methylpentane. Among these, azobisisobutyronitrile, azobis(2,4-dimethylvaleronitrile), and 1,1'-azobiscyclohexane-1-carbonitrile are particularly preferably used.

The additive amount of the initiator to be used for producing the graft copolymer is subject to no particular limitation, but is preferably 0.1 to 0.5 part by weight, with respect to 100 parts by weight of the total amount of the rubbery polymer and the vinyl-based monomer mixture, from the viewpoint of easily adjusting the weight-average molecular weight and dispersity of the acetone-soluble components of the graft copolymer to the above-mentioned range.

In cases where the graft copolymer is produced, a chain transfer agent may be used. Using the chain transfer agent can facilitate adjusting the weight-average molecular weight, dispersity, and graft ratio of the acetone-soluble components of the graft copolymer to desired ranges.

Examples of the chain transfer agent include: mercaptans such as *n*-octyl mercaptan, *t*-dodecyl mercaptan, *n*-dodecyl mercaptan, *n*-tetradecyl mercaptan, and *n*-octadecyl mercaptan; and terpenes such as terpinolene. These may be used in combination of two or more kinds thereof. Among these, *n*-octyl mercaptan and *t*-dodecyl mercaptan are preferably used.

The additive amount of the chain transfer agent to be used for producing the graft copolymer is subject to no particular limitation, but is preferably 0.05 part by weight or more, more preferably 0.2 part by weight or more, with respect to 100 parts by weight of the total amount of the rubbery polymer and the vinyl-based monomer mixture, from the viewpoint of easily adjusting the weight-average molecular weight and graft ratio of the graft copolymer to the above-mentioned ranges. On the other hand, the additive amount is preferably 0.7 part by weight or less, more preferably 0.6 part by weight or less.

In cases where the graft copolymer is produced by an emulsion polymerization method, the polymerization temperature is subject to no particular limitation, but is preferably 40 to 70°C from the viewpoint of easily adjusting the weight-average molecular weight, dispersity, and graft ratio of the graft copolymer to the above-mentioned ranges and from the viewpoint of emulsification stability.

In cases where the graft copolymer is produced by an emulsion polymerization method, a coagulant is commonly added to a graft copolymer latex to recover the graft copolymer. As the coagulant, an acid or a water-soluble salt is preferably used.

Examples of the acid include sulfuric acid, hydrochloric acid, phosphoric acid, and acetic acid. Examples of the water-soluble salt include calcium chloride, magnesium chloride, barium chloride, aluminum chloride, magnesium sulfate, aluminum sulfate, aluminum ammonium sulfate, aluminum potassium sulfate, aluminum sodium sulfate, and the like. These may be used in combination of two or more kinds thereof. From the viewpoint of enhancing the color tone of the molded article, it is preferable that the emulsifier is not left in the thermoplastic resin composition, and it is preferable that an alkali fatty acid salt used as an emulsifier is acid-coagulated.

The vinyl-based copolymer is obtained by copolymerizing a vinyl-based monomer mixture containing at least an aromatic vinyl-based monomer and a vinyl cyanide-based monomer. The mixture may be a combination of two or more different copolymers containing monomers at different ratios of composition, or may be a combination of two or more different copolymers having different weight-average molecular weights.

Examples of the aromatic vinyl-based monomer include the monomers exemplified as an aromatic vinyl-based monomer to be used for the graft copolymer, as above-mentioned, and styrene is preferable. Examples of the vinyl cyanide-based monomer include the monomers exemplified as a vinyl cyanide-based monomer to be used for the graft copolymer, as above-mentioned, and acrylonitrile is preferable.

The amount of the aromatic vinyl-based monomer contained in the vinyl-based monomer mixture is preferably 60 wt% or more, more preferably 65 wt% or more, with respect to 100 wt% of the total amount of the vinyl-based monomer mixture, from the viewpoint of further enhancing the fluidity of the thermoplastic resin composition and the rigidity of the molded article. On the other hand, the amount of the aromatic vinyl-based monomer contained in the vinyl-based monomer mixture is preferably 80 wt% or less, more preferably 75 wt% or less, from the viewpoint of enhancing the fluidity and the impact resistance of the molded article.

The amount of the vinyl cyanide-based monomer contained in the vinyl-based monomer mixture is preferably 20 wt% or more, more preferably 25 wt% or more, with respect to 100 wt% of the total amount of the vinyl-based monomer mixture, from the viewpoint of further enhancing the chemical resistance and impact resistance of the molded article. On the other hand, the amount of the vinyl cyanide-based monomer contained in the vinyl-based monomer mixture is preferably 40 wt% or less, more preferably 35 wt% or less, from the viewpoint of stabilizing the color tone of the molded article.

In addition, another monomer copolymerizable with any of these is the above-mentioned aromatic vinyl-based monomer or a vinyl-based monomer other than a vinyl cyanide-based monomer, and is subject to no particular limitation. Specific examples of the another monomer include the monomers exemplified as another monomer in the vinyl-based monomer mixture.

The weight-average molecular weight of the vinyl-based copolymer is subject to no particular limitation, but is preferably 100,000 to 250,000. The vinyl-based copolymer having a weight-average molecular weight of 100,000 or more makes it possible to further enhance the chemical resistance and impact resistance of the molded article. On the other hand, the vinyl-based copolymer having a weight-average molecular weight of 250,000 or less makes it possible to further enhance the fluidity.

Examples of a method that can be used as a method of producing the vinyl-based copolymer include, but are not limited particularly to, any method such as a suspension polymerization method, an emulsion polymerization method, a bulk polymerization method, or a solution polymerization method. Among these, a bulk polymerization method and a suspension polymerization method are preferable from the viewpoint of easiness of polymerization control, easiness of post-treatment, and productivity.

<Modified Polyolefin resin (B)>

Examples of the modified polyolefin resin (B) to be used for the present invention include a (co)polymer composed of at least one monomer of $C_{2-10}$ olefins. Examples of the olefin monomer include: $\alpha$-olefins such as ethylene, propylene, butene-1, pentene-1, hexene-1, 3-methylbutene-1, 4-methylpentene-1, and 3-methylhexene-1; furthermore cyclic olefins such as norbornene; and the like. These olefin monomers can be used singly or in combination of two or more kinds thereof. Among these olefin monomers, ethylene, propylene, butene-1, 3-methylbutene-1, 4-methylpentene-1, and norbornene are preferable. Propylene is more preferable from the viewpoint of water repellency and oil repellency. In this case, the modified polyolefin resin (B) is a modified polypropylene resin. If needed, a monomer such as a nonconjugated diene, for example, 4-methyl-1, 4-hexadiene, 5-methyl-1,4-hexadiene, 7-methyl-1, 6-octadiene, or 1,9-decadiene can be used. Examples of a modified functional group of the modified polyolefin resin (B) include reactive functional groups such as a carboxyl group, hydroxyl group, an epoxy group, an amino group, and an acid anhydride group. The modified functional group can be freely selected in accordance with the reactivity with a reactive functional group of each of the thermoplastic resin (A) and the modified polyorganosiloxane (C).

The amount of the modified polyolefin resin (B) blended in the thermoplastic resin composition according to the present invention is 0.1 part by mass or more and 5 parts by mass or less with respect to 100 parts by mass of the total amount of the thermoplastic resin (A) and the modified polyolefin resin (B). The modified polyolefin resin (B) blended in an amount of less than 0.1 part by mass will undesirably cause the water repellency and oil repellency to be poorer. The amount of more than 5 parts by mass will undesirably impair the compatibility between the thermoplastic resin (A) and the modified polyorganosiloxane (C), resulting in causing an appearance defect due to the modified polyorganosiloxane (C). Furthermore, (B) × (C) is preferably 7 or less, more preferably 1 to 7, wherein (B) × (C) represents the product of the amount of the modified polyolefin resin (B) and the amount of the modified polyorganosiloxane (C), both of the amounts are on a part-by-mass basis, from the viewpoint of water repellency and oil repellency. (B) × (C), the product of the amount of the modified polyolefin resin (B) and the amount of the modified polyorganosiloxane (C), both of the amounts are on a part-by-mass basis, within the above-described preferable range will not result in causing an appearance defect. The weight-average molecular weight of the modified polyolefin resin (B) is preferably 10,000 or more, more preferably 100,000 or more. The modified polyolefin resin (B) having a weight-average molecular weight within the above-described preferable range has good compatibility with the thermoplastic resin (A), and will not result in causing an appearance defect. The weight-average molecular weight of the modified polyolefin resin (B) can be measured by a high-temperature GPC method.

<Modified Polyorganosiloxane (C)>

The modified polyorganosiloxane (C) to be used for the present invention is a polyorganosiloxane the molecular chain of which has a reactive functional group bonded to both or one of the ends thereof and/or to the side chain thereof. The polyorganosiloxane has, as a reactive functional group, at least one selected from an epoxy group, a carboxyl group, an amino group, and an acid anhydride group. Examples of the polyorganosiloxane include an epoxy-modified silicone oil, a carboxy-modified silicone oil, an amino-modified silicone oil, a maleic anhydride-modified silicone oil, and the like. From the viewpoint of water repellency and oil repellency, an epoxy-modified silicone oil is preferable, and an alicyclic epoxy-modified silicone oil is particularly preferable. The viscosity of the modified polyorganosiloxane (C) is subject to no particular limitation, but is preferably 10 to 30,000 cSt, particularly preferably 100 to 20,000 cSt, from the viewpoint of inhibiting bleedout and of processability. The amount of the modified polyorganosiloxane (C) blended in the thermoplastic resin composition according to the present invention is 0.5 part by mass or more and 5 parts by mass or less with respect to 100 parts by mass of the total amount of the thermoplastic resin (A) and the modified polyolefin resin (B). The modified polyorganosiloxane (C) blended in an amount of less than 0.5 part by mass will undesirably cause the water repellency and oil repellency to be poorer. The amount of more than 5 parts by mass will undesirably result in causing an appearance defect due to an excess of the modified polyorganosiloxane (C).

<Polytetrafluoroethylene (D)>

The polytetrafluoroethylene (D) to be used for the present invention preferably has a number-average molecular weight of 200,000 or less in accordance with a differential scanning calorimetry (DSC) method. With the number-average molecular weight of 200,000 or more, the polytetrafluoroethylene is fiberized during melt-kneading, thereby causing a marked rise in viscosity. The polytetrafluoroethylene, if added in a slightly increased amount, becomes difficult to melt-knead and mold. Furthermore, the gloss is decreased markedly, and thus, the appearance is impaired significantly. The number-average molecular weight of the polytetrafluoroethylene (D) is calculated from the following formula 1 on the basis of a heat of crystallization, ΔHc, determined by differential scanning calorimetry when the polytetrafluoroethylene is heated from room temperature to 380°C at a heating rate of 10°C/min, and then cooled at 10°C/min.

$$(\text{Formula 1}) \quad Mn = 2.1 \times 10^{10} \times \Delta Hc^{-5.16}$$

Mn: number-average molecular weight, ΔHc: heat of crystallization (cal/g) DSC

The polytetrafluoroethylene (D) having a number-average molecular weight of 200,000 or less in accordance with a differential scanning calorimetry (DSC) method may be in powder form or water-dispersed form. Furthermore, from the viewpoint of the appearance quality of the molded article, the polytetrafluoroethylene (D) preferably has an average primary particle size of 5 $\mu$m or less, more preferably 1 $\mu$m or less. The amount of the polytetrafluoroethylene (D) blended in the thermoplastic resin composition according to the present invention is 1 part by mass or more and 10 parts by mass or less with respect to 100 parts by mass of the total amount of the thermoplastic resin (A) and the modified polyolefin resin (B). The polytetrafluoroethylene (D) blended in an amount of less than 1 part by mass will undesirably cause the water repellency and oil repellency to be poorer. The amount of more than 10 parts by mass will undesirably impair the compatibility of the thermoplastic resin (A) and of the modified polyolefin resin (B) with the modified polyorganosiloxane (C), resulting in causing an appearance defect due to the modified polyorganosiloxane (C). In addition, the influence of the polytetrafluoroethylene (D) itself on the appearance is increased, and will undesirably cause the appearance to have a defect. If needed, to the extent that the object of the present invention is not impaired, the thermoplastic resin composition according to the present invention can further have, blended therein, an inorganic filler such as glass fiber, silica, silicone powder, glass powder, glass beads, glass flakes, alumina, alumina fiber, carbon fiber, graphite fiber, stainless steel fiber, whisker, potassium titanate fiber, wollastonite, asbestos, hard clay, calcined clay, talc, kaolin, mica, calcium carbonate, magnesium carbonate, aluminum oxide, or mineral; an antioxidant such as a hindered phenol-based or a sulfur-containing compound-based, or a phosphorus-containing organic compound-based antioxidant; a heat stabilizer such as a phenol-based or an acrylate-based heat stabilizer; an ultraviolet absorber such as a benzotriazole-based, benzophenone-based, or salicylate-based ultraviolet absorber; a hindered amine-based light stabilizer; a lubricant or plasticizer such as higher fatty acid, acid ester, acid amide, or higher alcohol lubricant or plasticizer; a mold release agent such as montanic acid or a salt thereof, an ester thereof, a half ester thereof, stearyl alcohol, stearamide, an ethylene wax, an unmodified silicone oil, or a silicone gum; any kind of flame retardant; a flame retardant aid; an anti-coloring agent such as phosphite or hypophosphite; a neutralizer such as phosphoric acid, monosodium phosphate, maleic anhydride, or succinic anhydride; a nucleating agent; an antistatic agent such as an amine-based, sulfonic acid-based, or polyether-based antistatic agent; a colorant such as carbon black, a pigment, or a dye; or the like.

Next, a method of producing the thermoplastic resin composition according to the present invention will be described. A thermoplastic resin composition according to the present invention can be obtained, for example, by melt-kneading the above-mentioned thermoplastic resin (A), modified polyolefin resin (B), modified polyorganosiloxane (C), polytetrafluoroethylene (D), and, if desired, another component(s). A method of producing a thermoplastic resin composition according to the present invention is subject to no particular limitation. Examples of the method include; a method in which the components to be included in the thermoplastic resin composition are mixed using a mixer; a method in which the components are melt-kneaded uniformly; and the like. Examples of the mixer include a V-type blender, a super mixer, a super floater, a Henschel mixer, and the like. Examples of the melt-kneading machine include a kneader, a single-screw or twin-screw extruder, and the like. The melt-kneading temperature is preferably 200 to 300°C, more preferably 230 to 290°C. The thermoplastic resin composition obtained is commonly pelletized with a pelletizer, and used.

A thermoplastic resin composition according to the present invention can be molded by any molding method. Examples of the molding method include injection molding, extrusion molding, inflation molding, blow molding, vacuum molding, compression molding, and gas assist molding. Injection molding is preferably used. The cylinder temperature during injection molding is preferably 210 to 300°C, and the mold temperature is preferably 30 to 80°C.

EXAMPLES

The present invention will now be described in more detail with reference to Examples, but the present invention is not limited to these Examples. First, the evaluation methods in Examples will be described.

(1) Water contact angle (water repellency)

Thermoplastic resin composition pellets dried in a hot-air dryer at a temperature of 80°C for 3 hours were injection-molded in an injection molding machine EC75-SX manufactured by Toshiba Machine Co., Ltd., at a preset cylinder temperature of 250°C. The planar test piece obtained (120 mm in length, 100 mm in width, and 3 mm in thickness) was left to stand in an environment of a room temperature of 23°C and a humidity of 50% for 240 hours. Then, the water contact angle was determined under the following conditions 5 seconds after a drop of water was attached to the surface of the test piece.

Device: DMo-501, manufactured b Kyowa Interface Science Co., Ltd.
Slant: 0°
Amount of droplet: 2 μL
Method of analysis: a sessile drop method and a θ/2 method
Measurement atmosphere: an environment at 23°C and a humidity of 50% (2) Oleic acid contact angle (oil repellency)

Thermoplastic resin composition pellets dried in a hot-air dryer at a temperature of 80°C for 3 hours were injection-molded in the above-mentioned injection molding machine EC75-SX at a preset cylinder temperature of 250°C. The planar test piece obtained (120 mm in length, 100 mm in width, and 3 mm in thickness) was left to stand in an environment of a room temperature of 23°C and a humidity of 50% for 240 hours. Then, the oleic acid contact angle was determined under the following conditions 5 seconds after a drop of water was attached to the surface of the test piece.

Device: DMo-501, manufactured b Kyowa Interface Science Co., Ltd.
Slant: 0°
Amount of droplet: 1 μL
Method of analysis: a sessile drop method and a θ/2 method
Measurement atmosphere: an environment at 23°C and a humidity of 50% (3) Appearance of molded article

Thermoplastic resin composition pellets dried in a hot-air dryer at a temperature of 80°C for 3 hours were injection-molded in the above-mentioned injection molding machine EC75-SX at a preset cylinder temperature of 250°C. The surface of the planar test piece obtained (120 mm in length, 100 mm in width, and 3 mm in thickness) was checked, by visual observation, for any visible appearance defect such as a streak or a flow mark. The test piece was regarded as "fair" if found to have no such visible defect, or as "fail" if found to have any such visible defect.

[Production of Thermoplastic Resin (A)]

A reaction vessel having an internal volume of 20 $m^3$ and equipped with a stirring impeller was fed with 60 parts by weight (in terms of solid content) of polybutadiene latex (weight-average particle size of rubber: 0.30 $\mu$m, gel content: 85%), 120 parts by weight of pure water, 0.4 part by weight of sodium laurate, 0.2 part by weight of glucose, 0.2 part by weight of sodium pyrophosphate, and 0.01 part by weight of ferrous sulfate. The reaction vessel was purged with nitrogen, and the temperature was adjusted to 60°C. A monomer mixture of 6.6 parts by weight of styrene, 2.6 parts by weight of acrylonitrile, and 0.046 part by weight of t-dodecyl mercaptan was initially added with stirring over 30 minutes.

Subsequently, an initiator mixture of 0.36 part by weight of cumene hydroperoxide, 1.5 parts by weight of sodium laurate as an emulsifier, and 25 parts by weight of pure water was continuously added dropwise over 5 hours. Simultaneously, a monomer mixture of 22.2 parts by weight of styrene, 8.6 parts by weight of acrylonitrile, and 0.154 part by weight of t-dodecyl mercaptan was continuously added dropwise over 3 hours. After the dropwise addition of the monomer mixture, only the initiator mixture was continuously added dropwise for 2 hours, and then, the polymerization was terminated. The resulting graft copolymer latex was coagulated with 1.5 wt% sulfuric acid, then neutralized with sodium hydroxide, washed, centrifuged, and dried to obtain a powder graft copolymer (a).

The graft ratio of this graft copolymer was 36%, the weight-average molecular weight of the acetone-soluble components was 81,000, and the average amount of the acrylonitrile monomer unit was 28 wt%.

Then, 6 parts by weight of the aqueous solution of a methyl methacrylate-acrylamide binary copolymer and 150 parts by weight of pure water were placed in a 20 L autoclave. The resulting mixture was stirred at 400 rpm. The inside of the system was purged with nitrogen gas. After the system was heated to 70°C, a monomer mixture of 28.9 parts by weight of acrylonitrile, 11.1 parts by weight of styrene, 0.32 part by weight of azobisisobutyronitrile, 0.063 part by weight of t-dodecylmercaptan, and 0.094 part by weight of n-octyl mercaptan was added over 30 minutes with the reaction system being stirred. The polymerization reaction was thus started. When one hour elapsed after the monomer mixture was added, 15 parts by weight of styrene was added using a supply pump. Then, styrene was added to the reaction vessel three times, 15 parts by weight each, at 30-minute intervals. After all of the monomers were added, the system was heated to 100°C over 60 minutes. After reaching the temperature, the system was maintained at 100°C for 30 minutes, and then cooled. Then, separation, washing, and drying of the polymer were performed to obtain vinyl-based copolymer beads (b). The weight-average molecular weight was 320,000, and the average amount of the acrylonitrile monomer unit was 27 wt%.

Furthermore, a vinyl-based copolymer (c) was produced by the following method using a continuous bulk polymerization apparatus including: a 2 $m^3$ complete mixing polymerization tank having a condenser for evaporation and dry distillation of the monomer vapor and a helical ribbon impeller; a single-screw extruder-type preheater; and a twin-screw extruder-type monomer remover. A monomer mixture containing 72 parts by weight of styrene, 28 parts by weight of acrylonitrile, 0.30 part by weight of n-octyl mercaptan, and 0.014 part by weight of 1,1-bis(t-butylperoxy)cyclohexane was continuously supplied to the complete mixing polymerization tank at 150 kg/hour, and subjected to continuous bulk polymerization while maintaining the polymerization temperature at 130°C and the internal pressure in the tank at 0.08 MPa. The polymerization rate of the polymerization reaction mixture at the outlet of the complete mixing polymerization tank was controlled to 65 $\pm$ 3%. The polymerization reaction mixture was preheated by the single-screw extruder-type preheater and then supplied to the twin-screw extruder-type monomer remover. The unreacted monomer was evaporated and recovered under reduced pressure through the vent port of the twin-screw extruder-type monomer remover. The unreacted monomer recovered was continuously refluxed to the complete mixing polymerization tank. Thereafter, the melt-kneaded product was discharged in the form of a strand, and cut with a cutter to obtain pellets of the vinyl-based copolymer (c). The weight-average molecular weight of the vinyl-based copolymer (c) obtained was 120,000. The average amount of the acrylonitrile monomer unit was 28 wt%.

Using a single-screw extruder having a vent and having a screw diameter of 40 mm (FS40, manufactured by Ikegai Corporation), 23 mass% of the graft copolymer (a), 20 mass% of the vinyl-based copolymer (b), and 57 mass% of the vinyl-based copolymer (c) were melt-kneaded under the conditions of a preset cylinder temperature of 250°C and a screw rotation speed of 80 rpm to obtain pellets of the thermoplastic resin (A).

[Modified Polyolefin resin (B)]

Maleic anhydride-modified polypropylene "MG-670P (having a weight-average molecular weight of approximately 170,000)" manufactured by Riken Vitamin Co., Ltd. was used.

As a Comparative Example, unmodified polypropylene "MA3U (having a weight-average molecular weight of approximately 170,000)" manufactured by Japan Polypropylene Corporation was used.

[Modified Polyorganosiloxane (C)]

Alicyclic epoxy-modified silicone oil "BY16-839" manufactured by Dow Toray Co., Ltd. was used.

As a Comparative Example, unmodified silicone oil "SH200CV 10,000 cSt" manufactured by Dow Toray Co., Ltd. was used.

[Polytetrafluoroethylene (D)]

3M™ DYNEON™ PTFE Micropowder "TF9207Z" manufactured by 3M Company was used.

Examples and Comparative Examples will now be described.

(Examples and Comparative Examples)

The above-mentioned thermoplastic resin (A), modified polyolefin resin (B), modified polyorganosiloxane (C), and polytetrafluoroethylene (D) were blended in such amounts on a part-by-mass basis as mentioned in Table 1 or Table 2. The resulting mixture was melt-kneaded under the conditions of a preset cylinder temperature of 260°C and a screw rotation speed of 250 rpm using a twin-screw extruder having a vent and having a screw diameter of 30 mm (PCM30, manufactured by Ikegai Corporation) to obtain pellets of a resin composition. As above-mentioned, the appearance of the test piece molded under the predetermined conditions was checked by visual observation, and the water contact angle and the oleic acid contact angle were determined. The evaluation results are tabulated in Table 1 and Table 2.

[Table 1]

| | Example 1 | Example 2 | Example 3 | Example 4 | Example 5 | Example 6 | Example 7 | Example 8 |
|---|---|---|---|---|---|---|---|---|
| Thermoplastic Resin (A) | 98 | 97 | 96 | 95 | 97 | 97 | 97 | 95 |
| Modified Polyolefin Resin (B) | 2 | 3 | 4 | 5 | 3 | 3 | 3 | 5 |
| Modified Polyorganosiloxane (C) | 3 | 2 | 1.5 | 1 | 2 | 2 | 2 | 0.5 |
| Polytetrafluoroethylene (D) | 3 | 3 | 3 | 3 | 1.5 | 5 | 8 | 3 |
| (B) × (C) | 6 | 6 | 6 | 5 | 6 | 6 | 6 | 3 |
| Water Contact Angle (°) | 101 | 104 | 103 | 101 | 99 | 104 | 104 | 101 |
| Oleic Acid Contact Angle (°) | 40 | 54 | 53 | 46 | 37 | 58 | 56 | 38 |
| Appearance of Molded Article | fair | fair | fair | fair | fair | fair | fair | fair |

[Table 2]

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|
| Thermoplastic Resin (A) | 100 | 95 | 97 | 95 | 94 | 94 | 90 | 97 | 97 | 97 | 97 |
| Modified Polyolefin Resin (B) | 0 | 5 | 3 | 5 | 6 | 6 | 10 | 3 | 3 | 0 | 3 |
| Unmodified Polyolefin Resin | 0 | 0 | 0 | 0 | 0 | 0 | 0 | 0 | 0 | 3 | 0 |
| Modified Polyorganosiloxane (C) | 3 | 0 | 2 | 0.1 | 1.5 | 3 | 3 | 2 | 2 | 2 | 0 |
| Unmodified Polyorganosiloxane | 0 | 0 | 0 | 0 | 0 | 0 | 0 | 0 | 0 | 0 | 2 |
| Polytetrafluoroethylene (D) | 3 | 3 | 0 | 3 | 3 | 3 | 3 | 0.5 | 12 | 3 | 3 |
| $(B) \times (C)$ | 0 | 0 | 6 | 0.5 | 9 | 18 | 30 | 6 | 6 | 0 | 0 |
| Water Contact Angle (°) | 99 | 89 | 95 | 91 | 102 | 102 | 102 | 94 | 103 | - | 92 |
| Oleic Acid Contact Angle (°) | 27 | 15 | 26 | 20 | 48 | 48 | 47 | 25 | 55 | - | 18 |
| Appearance of Molded Article | fair | fair | fair | fair | fail | fail | fail | fair | fail | fail | fair |

The evaluation results in Table 1 have revealed that, with each of the thermoplastic resin compositions (Examples 1 to 8) according to the embodiments of the present invention, the water repellency and oil repellency of the thermoplastic resin composition and the appearance of the molded article are excellent in a balanced manner.

On the other hand, the evaluation results in Table 2 have revealed that Comparative Example 1 exhibited poorer oil repellency because of not containing the modified polyolefin resin (B), that Comparative Example 2 exhibited poorer water repellency and oil repellency because of not containing the modified polyorganosiloxane (C), and that Comparative Example 3 exhibited poorer oil repellency because of not containing the polytetrafluoroethylene (D). The results in Comparative Examples 1 to 3 have revealed that the synergistic effects of the modified polyolefin resin (B), the modified polyorganosiloxane (C), and the polytetrafluoroethylene (D) in combination develop the excellent water repellency and oil repellency. Comparative Example 4 exhibited poor water repellency and oil repellency because of containing the modified polyorganosiloxane (C) in a smaller amount. Comparative Examples 5 to 7 caused an appearance defect because (B) × (C), which is the product of the amount of the modified polyolefin resin (B) and the amount of the modified polyorganosiloxane (C), both of the amounts are on a part-by-mass basis, is more than 7. Comparative Example 8 exhibited poor water repellency and oil repellency because of containing the polytetrafluoroethylene (D) in a smaller amount. Comparative Example 9 caused an appearance defect because of containing the polytetrafluoroethylene (D) in an excessive amount. Comparative Example 10 caused an appearance defect because of containing the unmodified polyolefin resin in place of the modified polyolefin resin (B), and thus decreasing the compatibility. Comparative Example 11 exhibited poor water repellency and oil repellency because of containing the unmodified polyorganosiloxane in place of the modified polyorganosiloxane (C).

INDUSTRIAL APPLICABILITY

A thermoplastic resin composition according to the present invention can be widely used as a molded article in any shape. Examples of the molded article include a film, a sheet, fibers, cloth, non-woven fabric, an injection molded article, an extrusion molded article, a vacuum pressure molded article, a blow molded article, and a composite with another material. A molded article according to the present invention has extremely high water repellency and oil repellency, and hence, can be particularly preferably used for, but is not limited particularly to: applications that involve frequent contact with water or oil, such as kitchen parts and utensils, toiletries, bathroom parts and utensils, and outdoor parts and utensils; applications that involve many opportunities to touch a person's hand and be easily marked with a fingerprint, such as stationery, sundries, and cosmetic containers; and the like.

**Claims**

1.   A thermoplastic resin composition comprising: a thermoplastic resin (A), a modified polyolefin resin (B), a modified polyorganosiloxane (C), and a polytetrafluoroethylene (D), wherein the thermoplastic resin (A) is a thermoplastic resin other than the modified polyolefin resin (B), and wherein, with respect to 100 parts by mass of the total amount of the thermoplastic resin (A) and the modified polyolefin resin (B), the amount of the modified polyolefin resin (B) is 0.1 part by mass or more and 5 parts by mass or less, the amount of the modified polyorganosiloxane (C) is 0.5 part by mass or more and 5 parts by mass or less, and the amount of the polytetrafluoroethylene (D) is 1 part by mass or more and 10 parts by mass or less.

2.   The thermoplastic resin composition according to claim 1, wherein (B) × (C) is 7 or less, wherein (B) × (C) represents the product of the amount of the modified polyolefin resin (B) and the amount of the modified polyorganosiloxane (C), both of the amounts are on a part-by-mass basis, assuming that the total amount of the thermoplastic resin (A) and the modified polyolefin resin (B) is 100 parts by mass.

3.   The thermoplastic resin composition according to claim 1 or 2, wherein the thermoplastic resin (A) comprises at least one kind of styrene resin.

4.   The thermoplastic resin composition according to any one of claims 1 to 3, wherein the modified polyolefin resin (B) is a modified polypropylene resin.

5.   The thermoplastic resin composition according to any one of claims 1 to 4, wherein the modified polyolefin resin (B) has a weight-average molecular weight of 100,000 or more.

6.   The thermoplastic resin composition according to any one of claims 1 to 5, wherein the modified polyorganosiloxane (C) is an alicyclic epoxy-modified silicone oil.

7. A molded article composed of the thermoplastic resin composition according to any one of claims 1 to 6.

## INTERNATIONAL SEARCH REPORT

| International application No. |
|---|
| **PCT/JP2021/034503** |

**A.     CLASSIFICATION OF SUBJECT MATTER**

*C08L 23/26*(2006.01)i; *C08L 25/04*(2006.01)i; *C08L 27/18*(2006.01)i; *C08L 83/04*(2006.01)i; *C08L 101/00*(2006.01)i
FI:    C08L101/00; C08L23/26; C08L83/04; C08L27/18; C08L25/04

According to International Patent Classification (IPC) or to both national classification and IPC

**B.     FIELDS SEARCHED**

Minimum documentation searched (classification system followed by classification symbols)

C08L23/26; C08L25/04; C08L27/18; C08L83/04; C08L101/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| Y | WO 2009/072299 A1 (PANASONIC CORP.) 11 June 2009 (2009-06-11) | 1-2, 4-5, 7 |
| | claims, paragraph ]0012], examples 1, 3-6 | |
| A | | 3, 6 |
| Y | JP 2015-24548 A (DAINIPPON PRINTING CO., LTD.) 05 February 2015 (2015-02-05) | 1-2, 4-5, 7 |
| | claims, paragraphs [0046], [0047], example 1 | |
| A | | 3, 6 |
| Y | JP 2020-45473 A (TOPPAN PRINTING CO., LTD.) 26 March 2020 (2020-03-26) | 1-2, 4-5, 7 |
| | claims, paragraphs [0053], [0063], examples 4, 17 | |
| A | | 3, 6 |
| Y | WO 2020/184437 A1 (AGC INC.) 17 September 2020 (2020-09-17) | 1-2, 4-5, 7 |
| | paragraph [0003] | |
| A | | 3, 6 |

☑ Further documents are listed in the continuation of Box C.        ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **21 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2021/034503** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2019-182956 A (MITSUBISHI PENCIL CO., LTD.) 24 October 2019 (2019-10-24)<br>    paragraph [0002] | 1-2, 4-5, 7 |
| A |  | 3, 6 |
| Y | JP 10-316833 A (TORAY INDUSTRIES, INC.) 02 December 1998 (1998-12-02)<br>    paragraph [0027] | 1-2, 4-5, 7 |
| A |  | 3, 6 |
| Y | JP 2008-38092 A (NIPPON KASEI CHEMICAL CO., LTD.) 21 February 2008 (2008-02-21)<br>    paragraphs [0037], [0038] | 1-2, 4-5, 7 |
| A |  | 3, 6 |
| Y | WO 2018/163911 A1 (SHOWA DENKO KK) 13 September 2018 (2018-09-13)<br>    paragraphs [0033]-[0035] | 1-2, 4-5, 7 |
| A |  | 3, 6 |
| A | JP 2019-73567 A (NIPPON STEEL & SUMIKIN ANTI-CORROSION CO., LTD.) 16 May 2019 (2019-05-16)<br>    entire text, all drawings | 1-7 |
| A | JP 2007-320980 A (TEIJIN CHEMICALS LTD.) 13 December 2007 (2007-12-13)<br>    entire text, all drawings | 1-7 |

Form PCT/ISA/210 (second sheet) (January 2015)

**INTERNATIONAL SEARCH REPORT**
**Information on patent family members**

International application No.

**PCT/JP2021/034503**

| Patent document cited in search report | | | Publication date (day/month/year) | Patent family member(s) | | | Publication date (day/month/year) |
|---|---|---|---|---|---|---|---|
| WO | 2009/072299 | A1 | 11 June 2009 | EP 2223962 A1 claims, paragraph [0013], examples 1, 3-6 CN 101889053 A | | | |
| JP | 2015-24548 | A | 05 February 2015 | (Family: none) | | | |
| JP | 2020-45473 | A | 26 March 2020 | WO 2020/059717 A1 claims, paragraphs [0060], [0070], examples 4, 17 | | | |
| WO | 2020/184437 | A1 | 17 September 2020 | (Family: none) | | | |
| JP | 2019-182956 | A | 24 October 2019 | WO 2019/194101 A1 paragraph [0002] | | | |
| JP | 10-316833 | A | 02 December 1998 | (Family: none) | | | |
| JP | 2008-38092 | A | 21 February 2008 | (Family: none) | | | |
| WO | 2018/163911 | A1 | 13 September 2018 | US 2020/0010691 A1 [0077]-[0081] EP 3594305 A1 CN 110382651 A KR 10-2019-0126313 A | | | |
| JP | 2019-73567 | A | 16 May 2019 | (Family: none) | | | |
| JP | 2007-320980 | A | 13 December 2007 | (Family: none) | | | |

Form PCT/ISA/210 (patent family annex) (January 2015)

**REFERENCES CITED IN THE DESCRIPTION**

**Patent documents cited in the description**

- JP 2202553 A
- JP 10316833 A
- JP 2011168186 A